# EUROPÄISCHE PATENTSCHRIFT

(11) **EP 3 390 019 B1**
(45) Veröffentlichungstag und Bekanntmachung des Hinweises auf die Patenterteilung: **27.05.2020**
(21) Anmeldenummer: 16822926.8
(22) Anmeldetag: 14.12.2016
(51) Int. Cl.: B29C 70/20, B29C 70/30, B29C 65/08

(54) **VERFAHREN UND VORRICHTUNG ZUR HERSTELLUNG EINER FASERVERSTÄRKTEN HALBZEUGPLATTE DURCH ULTRASCHALLSCHWEISSEN**
METHOD AND DEVICE FOR PRODUCING A FIBER-REINFORCED SEMI-FINISHED PLATE BY ULTRASONIC WELDING
PROCÉDÉ ET DISPOSITIF DE FABRICATION D'UNE PLAQUE DE PRODUIT SEMI-FINI RENFORCÉE DE FIBRES PAR SOUDAGE PAR ULTRASONS

(30) Priorität: 17.12.2015 EP 15200643; 17.12.2015 EP 15200659; 22.02.2016 EP 16156688; 05.04.2016 EP 16163840
(43) Veröffentlichungstag der Anmeldung: 24.10.2018
(73) Patentinhaber: Covestro Deutschland AG, 51373 Leverkusen (DE)
(72) Erfinder: KNAUPP, Matthias, Dr., 40764 Langenfeld (DE); GRIMM, Thomas, 50765 Köln (DE); BÖRGER, Henning, 91459 Markt Erlbach (DE)
(74) Vertreter: Levpat
(86) Internationale Anmeldenummer: PCT/EP2016/080870
(87) Internationale Veröffentlichungsnummer: WO 2017/102773

(56) Entgegenhaltungen:
- EP-A1- 2 439 054
- US-A1- 2008 023 130
- US-B1- 6 432 236

## Beschreibung

Gegenstand der vorliegenden Erfindung ist ein kontinuierliches Verfahren zur Herstellung einer faserverstärkten Halbzeugplatte. Außerdem Gegenstand der vorliegenden Erfindung ist eine Vorrichtung zur Durchführung des kontinuierlichen Verfahrens zur Herstellung einer faserverstärkten Halbzeugplatte.

Der Einsatz von faserverstärkten Materialien hat auf Grund ihrer ausgezeichneten spezifischen Eigenschaften in den letzten Dekaden stetig zugenommen. Insbesondere bei beschleunigten Strukturen werden faserverstärkte Materialien eingesetzt, um ohne Verluste bei der Festigkeit und Steifigkeit des Materials eine Gewichtsreduktion zu ermöglichen und so den Energieverbrauch zu minimieren.

Bei einem faserverstärkten Material, auch Faserverbundwerkstoff oder kurz Verbundwerkstoff genannt, handelt es um einen mindestens zweiphasigen Werkstoff, der aus einem Matrixmaterial besteht, in dem Fasern im Wesentlichen vollständig eingebettet und ummantelt sind. Die Matrix hat eine formgebende Funktion, soll die Fasern vor äußeren Einflüssen schützen und ist notwendig, um Kräfte zwischen den Fasern zu übertragen sowie äußere Lasten einzuleiten. Die Fasern tragen maßgeblich zur mechanischen Leistungsfähigkeit des Werkstoffs bei, wobei in der Industrie häufig Glas-, Carbon-, Polymer-, Basalt-, oder Naturfasern zum Einsatz kommen. Als Matrixmaterial werden - abhängig vom Einsatzzweck - im Allgemeinen duroplastische oder thermoplastische Polymere eingesetzt, vereinzelt auch Elastomere.

Duroplastische Polymere sind bereits in zahlreichen Industrien seit langem etabliert. Ein entscheidender Nachteil ist jedoch die lange Aushärtungszeit, die bei der Verarbeitung zu Bauteilen zu entsprechend langen Zykluszeiten führt. Dies macht duroplastbasierte Verbundwerkstoffe vor allem für Industrieanwendungen mit hohen Stückzahlen unattraktiv. Thermoplastbasierte Verbundwerkstoffe hingegen werden häufig, soweit sie als bereits vollkonsolidierte Halbzeuge vorliegen, z.B. , bei der Weiterverarbeitung lediglich aufgeheizt, umgeformt und abgekühlt, was heutzutage in Zykluszeiten deutlich unter einer Minute zu realisieren ist. Darüber hinaus lässt sich die Verarbeitung mit weiteren Prozessschritten wie z.B. dem Hinterspritzen mit Thermoplasten kombinieren, wodurch ein sehr hoher Grad an Automatisierung und Funktionsintegration erreicht werden kann.

Als Verstärkungsmaterial werden im Wesentlichen Textilhalbzeuge wie Gewebe, mehrlagige Gelege oder Non-wovens (z.B. Vliese, Wirrfasermatten etc.) verwendet. Diese Formen der Faserverstärkung zeichnen sich dadurch aus, dass bereits im Textilhalbzeug die Ausrichtung der Faser - und somit der Kraftpfade im späteren Bauteil - festgelegt ist und nachträglich nicht mehr geändert werden kann. Dies ermöglicht zwar die direkte Herstellung eines multidirektional verstärkten Verbundwerkstoffes, hat aber Nachteile hinsichtlich der Flexibilität des Lagenaufbaus, der mechanischen Eigenschaften - wie beispielsweise Steifigkeit und Festigkeit - und der Wirtschaftlichkeit. Bei thermoplastbasierten Systemen werden diese Textilhalbzeuge üblicher Weise unter Druck und Temperatur mit Polymer imprägniert und anschließend als ausgehärtete Platte zugeschnitten und weiterverarbeitet.

Neben diesen bereits etablierten Systemen auf Basis von Textilhalbzeugen gewinnen thermoplastbasierte faserverstärkte Halbzeugplatten, die aus mehreren mit ihren großen Flächen, in anderen Worten "flächig", übereinanderliegenden, jeweils unidirektional faserverstärkten Halbzeugen aufgebaut sind, zunehmend an Bedeutung. Diese unidirektional faserverstärkten Halbzeuge sind in der Regel bahnförmig. Die Herstellung solcher unidirektional faserverstärkten Halbzeugbahnen - nachfolgend auch "Tapes" oder in der Einzahl "Tape" genannt - ist z.B. in EP 2 631 049 A1 beschrieben.

Bevorzugt sind dabei Tapes, bei denen das Matrixmaterial zu mindestens 50 Gew.-%, bevorzugt mindestens 70 Gew.-%, besonders bevorzugt zu mindestens 90 Gew.-%, ganz besonders bevorzugt mindestens 95 Gew.-%, insbesondere zu mindestens 97 Gew.-%, aus einem oder mehreren Thermoplasten besteht. Dabei ist der Thermoplast bevorzugt ausgewählt aus ein oder mehreren der Reihe umfassend Polycarbonat, Polyamid, Polyethylen, Polypropylen, Polyphenylensulfon, Polyetherimid, einem Polyetherketon wie Polyetheretherketon Polyetherketonketon, Polyetheretheretherketon, Polyetheretherketonketon, Poly(etherketon-etherketonketon) und thermoplastisches Polyurethan. Besonders bevorzugt ist der Thermoplast Polycarbonat oder ein auf Polycarbonat basierender Thermoplast.

Als ein auf Polycarbonat basierender Thermoplast wird im Rahmen der vorliegenden Erfindung ein Thermoplast verstanden, der mindestens 50 Gew.-%, vorzugsweise mindestens 60 Gew.-%, bevorzugt mindestens 70 Gew.-%, insbesondere mindestens 80 Gew.-%, besonders bevorzugt mindestens 90 Gew.-%, ganz besonders bevorzugt mindestens 95 Gew.-%, insbesondere mindestens 97 Gew.-% Polycarbonat enthält. Anders ausgedrückt kann ein auf Polycarbonat basierender Thermoplast im Rahmen der vorliegenden Erfindung höchstens zu 50 Gew.-%, vorzugsweise höchstens 40 Gew.-%, bevorzugt höchstens 30 Gew.-%, insbesondere höchstens 20 Gew.-%, besonders bevorzugt höchstens 10 Gew.-%, ganz besonders bevorzugt höchstens 5 Gew.-%, insbesondere höchstens 3 Gew.-% einen oder mehrere von Polycarbonat verschiedene Bestandteile als Blendpartner enthalten.

Bevorzugt besteht der auf Polycarbonat basierende Thermoplast im Wesentlichen, insbesondere zu 100 Gew.-% aus Polycarbonat.

Wenn hier von Polycarbonat die Rede ist, so sind damit auch Mischungen verschiedener Polycarbonate gemeint. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Bevorzugt besteht der auf Polycarbonat basierende Kunststoff zu 70 Gew.-%, 80 Gew.-%, 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen. Einzelheiten der Herstellung von Polycarbonaten sind dem Fachmann seit mindestens etwa 40 Jahren gut bekannt. Beispielhaft sei hier auf Schnell, Chemistry and Physics of Polycarbonates, Polymer Reviews, Volume 9, Interscience Publishers, New York, London, Sydney 1964, auf D. Freitag, U. Grigo, P.R. Müller, H. Nouvertne, BAYER AG, Polycarbonates in Encyclopedia of Polymer Science and Engineering, Volume 11, Second Edition, 1988, Seiten 648-718 und schließlich auf U. Grigo, K. Kirchner und P.R. Müller Polycarbonate in BeckerBraun, Kunststoff-Handbuch, Band 31, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich. Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3 '-Bis-(4-hydroxyphenyl)-phthalimide oder 2-Aryl-3,3'-Bis-(4-hydroxyphenyl)-phthalimide wie 2-Phenyl-3,3'-Bis-(4-hydroxyphenyl)-phthalimid, 2-Alkyl-3,3'-Bis-(4-hydroxyphenyl)-phthalimide, wie 2-Butyl-3,3'-Bis-(4-hydroxyphenyl)-phthalimide, 2-Propyl-3,3'-Bis-(4-hydroxyphenyl)-phthalimide, 2-Ethyl-3,3'-Bis-(4-hydroxyphenyl)-phthalimide oder 2-Methyl-3,3'-Bis-(4-hydroxyphenyl)-phthalimide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat. Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol undoder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Des Weiteren können auch Copolycarbonate Verwendung finden. Zur Herstellung dieser Copolycarbonate können 1 Gew.-% bis 25 Gew.-%, vorzugsweise 2,5 Gew.-% bis 25 Gew.-%, besonders bevorzugt 2,5 Gew.-% bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634, US-PS 3 189 662, EP 0 122 535, US 5 227 449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen.

Zusätzlich können optional bezogen auf das Gewicht des Thermoplasten bis zu 50,0 Gew.-%, bevorzugt 0,2 bis 40 Gew.-%, besonders bevorzugt 0,10 bis 30,0 Gew.-% sonstige übliche Additive enthalten sein.

Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, und anorganische Füllstoffe in den für Polycarbonat üblichen Mengen. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Erfindungsgemäß geeignete Polyamide sind ebenfalls bekannt oder nach literaturbekannten Verfahren herstellbar.

Erfindungsgemäß geeignete Polyamide sind bekannte Homopolyamide, Copolyamide und Mischungen dieser Polyamide. Es können dies teilkristalline und/oder amorphe Polyamide sein. Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7 bis 12 Kohlenstoffatomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethyl-hexamethylendiamin, m- und/oder p-Xylylendiamin, Bis-(4-aminocyclohexyl)-methan, Bis-(4-aminocyclohexyl)-propan, 3,3 '-Dimethyl-4,4'-diamino-dicyclohexyl-methan, 3-Aminomethyl-3,5,5-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomere erhalten wer-den, sind geeignet, ferner Copolymere, die unter Zusatz von Aminocarbonsäuren wie e-Aminocapronsäure, w-Aminoundecansäure oder w-Aminolaurinsäure oder ihren Lactamen, hergestellt werden.

Besonders geeignete amorphe Polyamide sind die Polyamide hergestellt aus Isoph-thalsäure, Hexamethylendiamin und weiteren Diaminen wie 4,4-Diaminodicyclo-hexylmethan, Isophorondiamin, 2,2,4- und/oder 2,4,4-Trimethylhexa-methylendi-amin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Di-methyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der Stellungsisomeren Diamindicyclohexalmethane eingesetzt werden, die sich zusammensetzen aus
70 bis 99 mol-% des 4,4'-Diamino-Isomeren,
1 bis 30 mol-% des 2,4'-Diamino-Isomeren und
0 bis 2 mol-% des 2,2'-Diamino-Isomeren,
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Erfindungsgemäß geeignete thermoplastische Polyurethane sind ebenfalls bekannt oder nach literaturbekannten Verfahren herstellbar.

Eine Übersicht über die Herstellung, Eigenschaften und Anwendungen von thermoplastischem Polyurethanen (TPU) ist z.B. im Kunststoff Handbuch [G. Becker, D. Braun], Band 7 "Polyurethane", München, Wien, Carl Hanser Verlag, 1983, gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Die eingesetzten thermoplastischen Polyurethane sind Reaktionsprodukte aus
I) organischen Diisocyanaten
II) Polyolen
III) Kettenverlängerern.

Als Diisocyanate (I) können aromatische, aliphatische, araliphatische, heterocyclische und cycloaliphatische Diisocyanate oder Gemische dieser Diisocyanate verwendet werden (vgl. HOU-BEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylendi-isocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entspre-chenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethan-diisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiiso-cyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexyl-methandiisocyanat, Diphenylmethandiisocyanat-Isomerengemische mit einem 4,4'-Diphenyl-methandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenylpoly-methylen-polyisocyanaten.

Zerewitinoff-aktive Polyole (II) sind solche mit im Mittel mindestens 1,8 bis höchstens 3,0 zerewitinoff-aktiven Wasserstoffatomen und einem zahlenmittleren Molekulargewicht M̅ₙ von 500 bis 10000 g/mol, vorzugsweise 500 bis 6000 g/mol.

Eingeschlossen sind neben Aminogruppen, Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten M̅ₙ von 500 bis 10000 g/mol, besonders bevorzugt solche mit einem zahlenmittleren Molekulargewicht M̅ₙ von 500 bis 6000 g/mol; z.B. Hydroxylgruppen aufweisende Polyester, Polyether, Polycarbonate und Polyesteramide oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im Wesentlichen linearen Polyether-Diole besitzen vorzugsweise zahlenmittlere Molekulargewichte M̅ₙ von 500 bis 10000 g/mol, besonders bevorzugt 500 bis 6000 g/mol. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6 Hexandiol, 1,10-Decandiol, 2,2-Dimethyl-1,3-propandiol, 1,3-Propandiol oder Di-propylenglykol. Je nach den gewünschten Eigenschaften können die mehrwertigen Alkohole allein oder in Mischung untereinander verwendet werden. Geeignet sind ferner Ester der Koh-lensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittleren Molekulargewichte M̅ₙ von 500 bis 10000 g/mol, besonders bevorzugt 600 bis 6000 g/mol und können einzeln oder in Form von Mischungen untereinander zur Anwendung kommen.

Zerewitinoff-aktive Polyole (III) sind sogenannte Kettenverlängerungsmittel und besitzen im Mittel 1,8 bis 3,0 zerewitinoff-aktive Wasserstoffatome und haben ein zahlenmittleres Molekulargewicht M̅ₙ von 60 bis 500 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden Diole oder Diamine mit einem Molekulargewicht von 60 bis 495 g/mol eingesetzt, vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bisethylenglykol oder Terephthalsäure-bis-1,4-butandiol, Hydroxy-alkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Iso-phorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4 toluylendiamin oder 3,5 Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4 Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Gegenüber Isocyanaten mono funktionelle Verbindungen können in Anteilen bis zu 2 Gew.-%, bezogen auf thermoplastisches Polyurethan, als sogenannte Kettenabbrecher oder Entformungshilfen eingesetzt werden. Geeignet sind z.B. Monoamine wie Butyl- und Di-butylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylen-glykolmonomethylether.

Die relativen Mengen der Verbindungen (II) und (III) werden bevorzugt so gewählt, dass das Verhältnis der Summe der Isocyanatgruppen in (I) zu der Summe der zerewitinoffaktiven Wasserstoffatome in (II) und (III) 0,85 : 1 bis 1,2 : 1 beträgt, bevorzugt 0,95 : 1 bis 1,1 : 1.

Die erfindungsgemäß eingesetzten, thermoplastischen Polyurethanelastomere (TPU) können als Hilfs- und Zusatzstoffe bis zu maximal 20 Gew.-%, bezogen auf die Gesamtmenge an TPU, der üblichen Hilfs- und Zusatzstoffe enthalten. Typische Hilfs- und Zusatzstoffe sind Katalysatoren, Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkyl-salze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 2 Gew.-%, bezogen auf die Gesamtmenge an TPU.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Weiterhin zur Einarbeitung geeignet sind handelsübliche Weichmacher wie Phosphate, Phthalate, Adipate, Sebacate und Alkylsulfonsäureester.

Erfindungsgemäß geeignetes Polyethylen ist ebenfalls bekannt oder nach literaturbekannten Verfahren herstellbar. Bei dem Polyethylen kann es sich sowohl um PE-HD (HDPE), PE-LD (LDPE), PE-LLD (LLDPE), PE-HMW, als auch um PE-UHMW handeln.

Auch das erfindungsgemäß geeignete Polypropylen, Polyphenylensulfon, Polyetherimid, und Polyetherketon ist ebenfalls bekannt oder nach literaturbekannten Verfahren herstellbar.

Allgemein kann es sinnvoll sein, dem Thermoplasten, der für die Matrix verwendet wird, Thermostabilisatoren und Fließverbesserer zuzusetzen, sofern diese nicht das Molekulargewicht des Thermoplasts verringern und/oder die Vikat-Temperatur erniedrigen.

Als Material für die Fasern kommen sowohl Naturfasern, z.B. faserförmige Minerale oder pflanzliche Fasern, als auch künstlich hergestellte Fasern, z.B. anorganische Synthesefasern oder organische Synthesefasern, in Betracht. Bevorzugt sind Glas-, Carbon-, oder Polymerfasern, wiederum bevorzugt Glas- oder Carbonfasern.

Ganz besonders bevorzugt werden Glasfasern mit einem E-Modul von größer 70 GPa, bevorzugt größer 80 GPa, besonders bevorzugt größer 90 GPa oder Carbonfasern mit einem E-Modul von größer 240 GPa, bevorzugt größer 245 GPa, besonders bevorzugt von 250 GPa oder mehr eingesetzt. Insbesonder e sind Carbonfasern mit diesen vorgenannten E-Modulen bevorzugt. Solche Carbonfasern sind beispielsweise unter der Bezeichnung Pyrofil von der Firma Mitsubishi Rayon CO., LtD. im Handel erhältlich.

Die Fasern sind in aller Regel mit einer sogenannten Schlichte beschichtet. Wird ein Thermoplast als Matrixmaterial verwendet, so enthalten geeignete Systeme für Schlichten häufig einen Duroplasten, ein Silan, ein Epoxidharz oder ein Polyurethan. Es ist aber auch möglich, dass die Fasern oder ein Teil der Fasern keine Schlichte aufweisen.

Die Tapes haben in der Regel in Laufrichtung eine Länge von 100 bis zu 3000 m. Erfindungsgemäß haben die Tapes eine Breite von 500 bis 1000 mm, bevorzugt von 600 bis 800 mm. Die Tapes haben eine Dicke von 100 bis 350 µm, bevorzugt von 120 bis 200 µm. Jedoch können auf der erfindungsgemäßen Vorrichtung auch anders dimensionierte Tapes verarbeitet werden.

Die Ausrichtung der Fasern in einem Tape ist jeweils unidirektional, das heißt, die Fasern in einem Tape liegen parallel zueinander. Dabei können die Fasern jedoch in jeglicher Richtung in der Flächenebene der Tapes ausgerichtet sein. Vorzugsweise sind die Fasern jedoch in 0°-, 30°-, 33°, 45°-, 60°- und 90°-Richtung zur Laufrichtung in der Flächenebene der Tapes ausgerichtet. Die jeweiligen Fasern sind dabei so lang, dass sie entsprechend ihrer Ausrichtung von einer Seite der Bahn bis zur jeweils gegenüberliegenden reichen. Für Fasern, die in 0°-Richtung oder - was technisch das gleiche ist - in 180°-Richtung ausgerichtet sind, bedeutet dies, dass sie genauso lang sind wie die Bahn selbst (quasi endlos); Fasern, die in 90°-Richtung ausgerichtet sind, sind genauso lang wie die Bahn breit ist. Für Winkel, die weder null noch 180° noch ein Vielfaches von 180° sind, gilt, dass die Länge der Fasern im Tape der Breite des Tapes dividiert durch den Sinus des Winkels in Grad, mit dem die Ausrichtung der Faser von der Laufrichtung des Tapes abweicht, entspricht.

Die Herstellung faserverstärkter Halbzeugplatten aus Tapes bietet Vorteile in der Wirtschaftlichkeit, da der Prozessschritt der Textilhalbzeugherstellung eingespart werden kann. Auch können die mechanischen Eigenschaften der faserverstärkten Halbzeugplatten durch Auswahl der Anzahl der Tapes, die zu einer faserverstärkten Halbzeugplatte verarbeitet werden, angepasst werden.

Auch können die mechanischen Eigenschaften der faserverstärkten Halbzeugplatten dadurch angepasst werden, dass die zu verarbeitenden Tapes nach der Ausrichtung der Fasern ausgewählt werden. So können die Fasern der zu verarbeitenden Tapes alle die gleiche Ausrichtung haben, im einfachsten Fall alle in 0°-Richtung zur Laufrichtung des Tapes. Alternativ können die Fasern mindestens eines zu verarbeitenden Tapes eine andere Ausrichtung wie die Fasern des oder der anderen Tape oder Tapes haben.

Um eine technisch brauchbare faserverstärkte Halbzeugplatte zu erhalten, muss beachtet werden, dass hinsichtlich der Ausrichtung der Fasern der Lagenaufbau der Tapes sowohl symmetrisch als auch balanciert ist, um eine technisch brauchbare faserverstärkte Halbzeugplatte zu erhalten.

Balanciert bedeutet in diesem Zusammenhang, dass die Summe der Winkel, mit denen die Fasern in den Tapes einer Halbzeugplatte ausgerichtet sind, immer 0° betragen muss, wobei ein Winkel, der in Laufrichtung des Tapes gegen den Uhrzeigersinn gemessen wird, das umgekehrte Vorzeichen zu einem Winkel erhält, der in Laufrichtung des Tapes mit dem Uhrzeigersinn gemessen wird. Dabei wird der Betrag der Winkels so angegeben, dass der jeweils kleinere Betrag der Zahl genannt wird, wobei das zugehörige Vorzeichen wie oben beschrieben festgelegt wird. So entspricht der Winkel von -150° beispielsweise einem Winkel von 30°, es wird dann der Betrag von 30° für den Winkel angegeben. Der Winkel von 135° entspricht einem Winkel von -45°; es wird dann der Betrag von -45° für den Winkel angegeben.

Faserverstärkte Halbzeugplatten, die nur aus Tapes aufgebaut sind, deren Fasern nur in 0°-Richtung und/oder 90°-Richtung zur Laufrichtung des Tapes ausgerichtet sind, sind ebenfalls balanciert.

Symmetrisch bedeutet in diesem Zusammenhang, dass der Lagenaufbau - betrachtet von der Mitte des Lagenaufbaus - spiegelbildlich erfolgt, beispielsweise nach dem Muster 0°, 90°, 0° oder 0°, 60°, -60°, 0° oder 0°, 60°,90°, -60°, 0° oder 0°, 60°,0°, -60°, 0° oder 45°,-45°. Nicht symmetrisch aber dennoch technisch brauchbar sind faserverstärkte Halbzeugplatten, die nur aus zwei Tapes aufgebaut sind, wobei die Fasern des einen Tapes in 0°-Richtung und die des anderen Tapes in 90°-Richtung zur Laufrichtung des Tapes ausgerichtet sind, also 0°, 90° oder 45°, -45°.

Darüber hinaus ist es vorteilhaft, wenn der Lagenaufbau mindestens zwei Tapes aufweist, bei denen sich die Ausrichtung der Fasern um 90° unterscheidet. Besonders vorteilhaft ist es dabei, wenn das Verhältnis der Fasern - bezogen auf die Zugfestigkeit - dieser mindestens zwei Tapes 1 : 9 bis 1 : 1 beträgt.

Die Dimensionierung der unidirektional faserverstärkte Halbzeuge kann dabei von langen Bahnen, bei denen die Länge der Bahn die Breite der Bahn um ein Vielfaches, gewöhnlich um mehr als ein hundertfaches, übersteigt, bis hin zu Bahnstücken, bei denen die Länge und die Breite der Bahn gleich sind, reichen. Wie bereits erwähnt liegen die unidirektional faserverstärkte Halbzeuge in der Regel in Form von Tapes, also Bahnen, vor.

Zur Herstellung der faserverstärkten Halbzeugplatten werden mehrere Tapes flächig übereinander gebracht, so dass die Kanten der Lagen parallel zueinander verlaufen und die Tapes bündig aufeinander liegen, es also keine überstehenden Ränder gibt, und anschließend untrennbar miteinander verbunden.

In Sinne der vorliegenden Erfindung bedeutet "untrennbar", dass die Tapes im multidirektional faserverstärkten Halbzeug derart miteinander verbunden sind, dass eine Trennung der Tapes die Gesamtstruktur der faserverstärkten Halbzeugplatte zerstörte.

Zur Herstellung der faserverstärkten Halbzeugplatte werden in der Regel in einem ersten Schritt die Tapes kontinuierlich von Rollen abgerollt, wobei jedes Tape eine eigene Rolle hat. Die Tapes werden dann so übereinander geführt, wie es dem vorgesehenen Lagenaufbau in der faserverstärkten Halbzeugplatte entspricht, und einer Einrichtung zugeführt, die die Tapes in einem zweiten Schritt untrennbar miteinander verbindet. Danach werden von den jetzt untrennbar miteinander verbundenen Tapes, die noch eine quasi endlose Bahn darstellen, die faserverstärkten Halbzeugplatten dadurch erhalten, dass sie in einem dritten Schritt von der Bahn der untrennbar miteinander verbundenen Tapes abgeschnitten werden; die erhaltene Bahn dieser untrennbar miteinander verbundenen Tapes wird nachfolgend auch faserverstärkte Halbzeugplattenbahn genannt.

Bevorzugt ist bei der Herstellung faserverstärkten Halbzeugplattenbahn und der daraus erhaltenen faserverstärkte Halbzeugplatten aus zwei, drei, vier, fünf, sechs oder mehr flächig übereinanderliegenden Tapes, dass sich die Ausrichtung der Fasern mindestens eines der Tapes von der Ausrichtung der Fasern des oder der anderen Tapes unterscheidet. In einem solchen Fall wird eine multidirektional faserverstärkte Halbzeugplatte erhalten. Multidirektional faserverstärkte Halbzeugplatten haben gegenüber unidirektional faserverstärkten Halbzeugplatten den Vorteil, dass sie Kräfte aus mehreren Richtungen gut ableiten können, während unidirektional faserverstärkte Halbzeugplatten nur Kräfte aus einer Richtung gut ableiten können. Die multidirektional faserverstärkten Halbzeugplatten können daher kraftpfadgerecht ausgelegt und hergestellt werden.

Bevorzugt sind faserverstärkte Halbzeugplatten, die aus drei, vier, fünf, sechs oder mehr flächig übereinanderliegenden Tapes hergestellt werden, wobei die Ausrichtung der Fasern im obersten Tape der Ausrichtung der Fasern im untersten Tape entspricht und mindestens ein Tape, das zwischen dem obersten und dem untersten Tape liegt, eine andere Ausrichtung der Fasern als die der Fasern des untersten und obersten Tapes aufweist, und bei denen der Lagenaufbau der Tapes hinsichtlich der Ausrichtung der Fasern sowohl symmetrisch als auch balanciert ist.

Auch sind faserverstärkte Halbzeugplatten bevorzugt, bei denen der Lagenaufbau mindestens zwei Tapes aufweist, bei denen sich die Ausrichtung der Fasern um 90° unterscheidet. Besonders vorteilhaft ist es dabei, wenn das Verhältnis der Fasern - bezogen auf die Zugfestigkeit und Elastizitätsmodul - dieser mindestens zwei Tapes 1 : 9 bis 1 : 1 beträgt.

Ganz besonders bevorzugt sind faserverstärkte Halbzeugplatten, die einen Lagenaufbau aus Tapes aufweisen, bei denen die Tapes - bestimmt nach dem Winkel, in denen die Fasern zur Laufrichtung des Tapes ausgerichtet sind - nach einem der nachfolgend aufgeführten Muster angeordnet sind:
0°, 90°, 0°; oder
0°, 90°, 90°, 0°; oder
0°, 90°, 0°, 90°, 0°; oder
0°, 90°, 90°, 90°, 0°; oder
0°, 90°, 90°, 90°, 90°, 0°; oder
-60°, 0°, 60°; oder
0°, 60°, -60°, 0°; oder
0°, 60°,90°, -60°, 0°; oder
0°, 60°,0°, -60°, 0°; oder
45°, -45°; oder
0°, -45°, +45°, 90°; oder
+45°, -45°, -45°, +45°; oder
0°, +45, -45°, 0°, -45°, +45°, 0°; oder
+45, -45°, 0°, 0°, +45, -45°, 0°, 0°, 0°, 0°, -45°, +45°, 0°, 0°, -45°, +45°; oder
+45°, -45°, -45°, +45°, 0°, 0°, 0°, 90°, 90°, 0°, 0°, 0°, +45°, -45°, -45°, +45°; oder
90°, +45, 0°, -45°, 0°, -45°, 0°, +45°, 90°; oder
0°, +45, -45°, 90°, 90°, -45°, +45°, 0°; oder
0°, +45, 90°, -45°,-45°, 90°, +45°, 0°; oder
+45, -45°, 0°, 0°, 90°, 90°, 90°, 90°, 0°, 0°, -45°, +45°; oder
+45, -45°, 0°, 0°, 90°, 90°, +45, -45°, 0°, 0°, 90°, 90°, 90°, 90°, 0°, 0°, -45°, +45°, +45, 90°, 90°, 0°, 0°, -45°, +45°, +45, oder
0°, 33°, -33°, 0; oder
0°, 33°, 90°, -33°, 0.

Ein entscheidender Schritt bei der Herstellung der faserverstärkten Halbzeugplatte aus Tapes ist das Verbinden eben dieser Tapes zur faserverstärkten Halbzeugplattenbahn.

Aus dem Stand der Technik bekannt ist, diesen Schritt mit Hilfe einer Presse, z.B. mit einer Doppelbandpresse, einer statischen Presse oder einer Intervallheizpresse, durchzuführen, in denen die Tapes unter Einwirkung von Druck und Temperatur zu einer faserverstärkten Halbzeugplattenbahn verbunden werden. Wichtig bei diesem Verbinden ist, dass die Tapes vollflächig oder zumindest nahezu vollflächig, d.h. bezogen auf die Flächen, mit denen sich die zu verbindenden Tapes gegenüberliegen, zu mehr als 99 %, bevorzugt zu 99,5 % bis 99,99 %, besonders bevorzugt zu 99,8 % bis 99,9 %, miteinander verbunden werden, nicht nur an einzelnen in ihrem Ausmaß begrenzten Teilen der zu verbindenden Flächen und nicht nur entlang von Schweißnähten. Dies wird in aller Regel bei der Durchführung dieses Verfahrensschrittes mit einer Presse gewährleistet. Nachteilig an der Durchführung dieses Verfahrensschritts mit einer Presse ist, dass der dazu nötige Wärmeeintrag und -austrag und die gegebenenfalls nötige Verbindezeit, also die Zeit, die nötig ist, um das vollflächig oder zumindest nahezu vollflächige Verbinden der Tapes durchzuführen, hoch sind, was die Kosten für die Herstellung von faserverstärkten Halbzeugplatten erhöht.

Weiter nachteilig an der Durchführung des Verfahrensschritts des Verbindens mit einer Presse ist, dass dabei unter dem untersten Tape und über dem obersten Tape, also den Tapes, die beim Pressen die Presse berühren, jeweils Trennmittel, beispielsweise eine Trennfolie oder ein Trennpapier, angebracht werden müssen, damit das Material des Tapes beim Pressen nicht an der Presse anklebt.

Ein Ankleben des Materials der Tapes an der Presse führt nicht nur dazu, dass nur mit großem Aufwand entfernt werden kann, sondern es führt auch dazu, dass die faserverstärkte Halbzeugplattenbahn eine Oberfläche aufweist, die die daraus erhaltene Halbzeugplatte für die weitere Verarbeitung unbrauchbar macht, also zum Ausschuss macht. Jedoch bereitet zum einen das Trennmittel selbst kosten, zum anderen verursacht auch dessen Entsorgung nach nur einmaligen Gebrauch Kosten. Auch muss für das Trennmittel ein zusätzlicher apparativer Aufwand getrieben werden, beispielsweise in Form von eigenen Rollen, Auf- und Abwicklern und/oder Führungen.

Darüber hinaus nachteilig an der Durchführung des Verfahrensschritts des Verbindens mit einer Presse ist, dass dieser nur diskontinuierlich durchgeführt werden kann.

Aufgabe der vorliegenden Erfindung ist es, die Nachteile des Stands der Technik zu überwinden. Insbesondere Aufgabe der vorliegenden Erfindung ist es, den Verfahrensschritt des Verbindens der Tapes zu einer faserverstärkten Halbzeugplattenbahn so durchzuführen, dass weniger Energie verbraucht und/oder weniger Zeit dafür verwendet wird. Außerdem soll der Verfahrensschritt des Verbindens ohne Trennmittel durchführbar sein, ohne dass das Material des obersten und/oder untersten Tapes an der Einrichtung, die zum Verbinden benutzt wird, anklebt. Außerdem soll das Verfahren möglichst kostengünstig sein.

Erfindungsgemäß wird die Aufgabe durch ein Verfahren mit den Merkmalen von Anspruch 1 gelöst.

Ultraschallschweißen an sich ist bekannt. Es ist ein Reibschweißverfahren, bei dem die Verschwei-ßung durch eine hochfrequente mechanische Schwingung im Bereich von in der Regel 20 bis 35 kHz erreicht wird, welche zwischen den Bauteilen zu Erwärmung durch Molekular- und Grenzflächenreibung führt.

Mit Hilfe eines Generators wird hochfrequenter Wechselstrom erzeugt und über ein Koaxialkabel zu einem Ultraschallwandler, dem sogenannten Konverter, übertragen, der daraus mit Hilfe des piezoelektrischen oder des magnetostriktiven Effekts eine mechanische Ultraschallschwingung erzeugt. Diese Schwingungen werden über ein Amplitudentransformationsstück auf eine Sonotrode übertragen. Unterschiedliche Anwendungen erfordern unterschiedliche Bauformen von Sonotroden, die meist aus Stahl, Aluminium oder Titan hergestellt werden, ihre Geometrie ist abhängig von der durch den eingesetzten Generator bereitgestellten Frequenz und von der Bearbeitungsaufgabe.

Die Sonotroden sind Werkzeuge, die durch das Einleiten von hochfrequenten mechanischen Schwingungen, also auch Ultraschall, in Resonanzschwingungen versetzt werden. Sie stellen die Verbindung vom Ultraschallgenerator zum Werkstück her und passen die Ultraschallschwingung an die Bearbeitungsaufgabe an. Sonotroden werden beim Ultraschallschweißen eingesetzt, um in den Füge- oder Kontaktzonen auf Grund verschiedener Prozesse eine dauerhafte Verbindung der Bauteile herzustellen.

Die Sonotrode und der Amboss haben als einzige Bauteile einer Ultraschall-Schweißmaschine direkten Kontakt zum zu verschweißenden Teil. Ihre Arbeitsflächen müssen deshalb so gestaltet sein, dass die Ultraschallschwingungen optimal in die Fügezone eingeleitet werden und Abdrücke auf den zu verschweißenden Teilen vermieden werden. Die mechanischen Schwingungen werden senkrecht in die Fügezonen des zu verschweißenden Teils eingeleitet werden.

Beim Schweißen von Kunststoff wird die Schwingung in der Regel senkrecht zu den Fügepartnern eingeleitet. Dieser erhitzt sich und beginnt zu erweichen, wodurch der Dämpfungskoeffizient ansteigt. Die Zunahme des Dämpfungskoeffizienten führt zu höherer innerer Reibung, was die Temperaturerhöhung weiter beschleunigt. Die aufgeschmolzenen Werkstoffe verbinden sich und sind nach dem Abkühlen und Erstarren miteinander verschweißt.

Neben punktförmigen Schweißungen sind mit Rollsonotroden auch Nahtschweißungen möglich.

Ultraschallschweißen ist durch sehr geringe Schweißzeiten und hohe Wirtschaftlichkeit gekennzeichnet. Es lassen sich gleiche und unterschiedliche Materialien miteinander verbinden, die Werkstücke werden nur im Schweißbereich geringfügig erwärmt, das umliegende Material somit nicht geschädigt.

So offenbart DE102011006930A1 das Verschweißen von mehrlagigen Kunststofffolien mittels Ultraschall, wobei nur das Verschweißen von zwei Kunststofffolien ausdrücklich offenbart ist. Auch handelt es sich bei den in DE102011006930A1 offenbarten Kunststofffolien nicht um faserverstärkte.

US 6,450,393 B1 offenbart das Verbinden von faserverstärkten Materialien mittels Ultraschallschweißen, ohne jedoch diese Materialien genauer zu spezifizieren. Ein Nachteil des Verfahrens nach US 6,450,393 B1 ist, dass immer nur zwei Lagen eines Materials miteinander verschweißt werden können. Soll das herzustellende Werkstück mehr als zwei Lagen aufweisen, so müssen die weiteren Lagen nach und nach mit den bereits miteinander verschweißten Lagen verbunden werden. Außerdem offenbart US 6,450,393 B1 nur ein Verschweißen der Lagen nur an einzelnen in ihrem Ausmaß begrenzten Teilen der zu verbindenden Flächen, quasi punktuell, oder nur entlang von Schweißnähten, also quasi linear, nicht aber vollflächig oder nahezu vollflächig. Dies hat den Nachteil, dass die Verbindung der einzelnen Schichten untereinander weniger fest ist.

DE60203770T2 offenbart das Verbinden von gestapelten Schichten metallischer Werkstoffe mittels Ultraschallschweißen, wobei bis zu vier Schichten miteinander verbunden werden können. Dabei werden die Schichten nur entlang einzelner Linien miteinander verbunden, nicht aber vollflächig oder nahezu vollflächig. Auch hier tritt der der Nachteil auf, dass die Verbindung der einzelnen Schichten untereinander weniger fest ist. DE60203770T2 offenbart darüber hinaus kein entsprechendes Verbinden von mehreren Tapes zu einer Halbzeugplatte.

US 2008/0023130 A1 offenbart bereits ein Verfahren zur Herstellung einer faserverstärkten Halbzeugplatte aus mehreren unidirektional faserverstärkten Halbzeugen, die von Rollen abgerollt werden.

US 6,432,236 B1 offenbart auch ein Verfahren zur Herstellung einer faserverstärkten Halbzeugplatte aus mehreren unidirektional faserverstärkten Halbzeugen.

EP 2 439 054 A1 offenbart ebenfalls ein ein Verfahren zur Herstellung einer faserverstärkten Halbzeugplatte aus mehreren unidirektional faserverstärkten Halbzeugen, die von Rollen abgerollt werden.

Weder US 2008/0023130 A1, noch US 6,432,236 B1, noch EP 2 439 054 A1 offenbaren jedoch, dass auf Trennmittel bei der Herstellung der faserverstärkten Halbzeugplattenbahn verzichtet werden kann, und dass die faserverstärkten Halbzeuge auch eine Breite von 500 bis 1000 mm aufweisen können.

Jedoch bietet sich Ultraschweißen auch zum Verbinden von Tapes mit einer Breite von 500 bis 1000 mm zu einer faserverstärkten Halbzeugplatte an. Auch hierbei müssen die einzelnen Tapes vollflächig oder zumindest nahezu vollflächig miteinander verbunden werden. Bisher wurde Ultraschallschweißen dazu nicht eingesetzt, weil das Vorurteil besteht, dass mit Ultraschallschweißen nur begrenzt auf kleine Flächen genügend Energie zum Verbinden von zwei Werkstücken eingebracht werden kann. Dabei werden diese Werkstücke nur an einzelnen in ihrem Ausmaß begrenzten Teilen der zu verbindenden Flächen miteinander verbunden oder bei linear fortschreitendem Ultraschallschweißen entsprechend entlang von linienförmigen Schweißnähten. Dieses Vorurteil wird dadurch aufgelöst, dass zum Ultraschallverschweißen der Tapes zu einer faserverstärkten Halbzeugplatte Rollsonotroden verwendet werden.

Mittels Ultraschallschweißen können somit zwei, drei, vier, fünf, sechs oder mehr Tapes vollflächig oder zumindest nahezu vollflächig zu einer faserverstärkten Halbzeugplattenbahn untrennbar miteinander verbunden werden. Von dieser faserverstärkten Halbzeugplattenbahn sind die faserverstärkten Halbzeugplatten durch Abschneiden erhältlich.

Das Werkzeug für das Abschneiden kann als Rollmesser, Schlagschere, Tafelschere, Guillotine, Hebelschere, Laser, Wasserstrahlschneideinrichtung, Fräse, Kappsäge, Bandsäge, Trennscheibe oder in einer anderen geeigneten Ausführungsform ausgebildet sein.

Das Verbinden der Tapes zu einer faserverstärkten Halbzeugplattenbahn mittels Ultraschallschwei-ßen ermöglicht auch die kontinuierliche Durchführung dieses Arbeitsschritts. Dies ist mit einer Presse in aller Regel nicht möglich; mit einer Presse kann der Arbeitsschritt des Verbindens der Tapes zu einer faserverstärkten Halbzeugplattenbahn nur in aller Regel nur diskontinuierlich durchgeführt werden. Ausnahme von dieser Regel wäre die Durchführung des Arbeitsschritts des Verbindens mit einer Rollbandpresse. Diese Pressen weisen aber große Nachteile auf, denn sie sind im Vergleich mit Ultraschallmaschinen für den gleichen Zweck weitaus teurer in der Anschaffung und haben zudem einen weitaus größeren Platz- und Energiebedarf. Zudem weist auch die Durchführung des Arbeitsschritts des Verbindens mit einer Rollbandpresse den Nachteil auf, dass ein Trennmittel verwendet werden muss.

Das Verbinden der Tapes zu einer faserverstärkten Halbzeugplattenbahn mittels Ultraschallschwei-ßen ermöglicht es daher auch, dass die Herstellung der faserverstärkten Halbzeugplatte kontinuierlich anstatt nur diskontinuierlich durchgeführt wird, da die Tapes kontinuierlich von ihren jeweiligen Rollen abgerollt und der mindestens einen Rollsonotrode zugeführt werden können. Da die Dauer des Arbeitsschritts des Abschneidens der faserverstärkten Halbzeugplatte von der Halbzeugplattenbahn verglichen mit der Gesamtdauer des Verfahrens zur Herstellung der faserverstärkten Halbzeugplatte vom Abrollen der Tapes (Arbeitsschritt 1) über das Verbinden der Tapes (Arbeitsschritt 2) bis zum Abschneiden der faserverstärkten Halbzeugplatte (Arbeitschritt 3) sehr gering ist, das Verfahren dadurch also nicht ins Stocken gerät, kann im Sinne der vorliegenden Erfindung auch dieser dritte Arbeitsschritt als kontinuierlich angesehen werden.

Gegenstand der Erfindung ist somit ein:
Verfahren zur Herstellung einer faserverstärkten Halbzeugplatte umfassend folgende Arbeitsschritte:
(1) Abrollen von zwei, drei, vier, fünf, sechs oder mehr unidirektional faserverstärkten Halbzeugen (Tapes) von Rollen;
(2) Verbinden der Tapes zu einer faserverstärkten Halbzeugplattenbahn mittels Ultraschallschweißen;
(3) Abschneiden der faserverstärkten Halbzeugplatte von der faserverstärkten Halbzeugplattenbahn,
wobei die zwei, drei, vier, fünf, sechs oder mehr Tapes flächig übereinander angeordnet und die Tapes werden vollflächig oder zumindest nahezu vollflächig untrennbar miteinander verbunden, und wobei die faserverstärkten Halbzeuge eine Breite von 500 bis 1000 mm aufweisen, und wobei pro 20 bis 100 mm Breite der faserverstärkten Halbzeuge eine Sonotrode eingesetzt wird, und wobei kein Trennmittel gebraucht wird.

Vorzugsweise ist dabei die Ausrichtung der Fasern mindestens eines der Tapes von der Ausrichtung der Fasern des oder der anderen Tapes verschieden.

Bevorzugt sind faserverstärkte Halbzeugplatten, die aus drei, vier, fünf oder sechs oder mehr flächig übereinanderliegenden Tapes hergestellt werden, wobei die Ausrichtung der Fasern im obersten Tape der Ausrichtung der Fasern im untersten Tape entspricht und mindestens ein Tape, das zwischen dem obersten und dem untersten Tape liegt, eine andere Ausrichtung der Fasern als die der Fasern des untersten und obersten Tapes aufweist, und bei denen der Lagenaufbau der Tapes hinsichtlich der Ausrichtung der Fasern sowohl symmetrisch als auch balanciert ist.

Auch bevorzugt sind faserverstärkte Halbzeugplatten, bei denen der Lagenaufbau mindestens zwei Tapes aufweist, bei denen sich die Ausrichtung der Fasern um 90° unterscheidet. Besonders vorteilhaft ist es dabei, wenn das Verhältnis der Fasern - bezogen auf die Zugfestigkeit und Elastizitätsmodul - dieser mindestens zwei Tapes 1 : 9 bis 1 : 1 beträgt.

Besonders bevorzugt sind faserverstärkte Halbzeugplatten, die einen Lagenaufbau aus Tapes aufweisen, bei denen die Tapes - bestimmt nach dem Winkel, in denen die Fasern zur Laufrichtung des Tapes ausgerichtet sind - nach einem der nachfolgend aufgeführten Muster angeordnet sind:
0°, 90°, 0°; oder
0°, 90°, 90°, 0°; oder
0°, 90°, 0°, 90°, 0°; oder
0°, 90°, 90°, 90°, 0°; oder
0°, 90°, 90°, 90°, 90°, 0°; oder
-60°, 0°, 60°; oder
0°, 60°, -60°, 0°; oder
0°, 60°, 90°, -60°, 0°; oder
0°, 60°,0°, -60°, 0°; oder
45°, -45°; oder
0°, -45°, +45°, 90°; oder
+45°, -45°, -45°, +45°; oder
0°, +45, -45°, 0°, -45°, +45°, 0°; oder
+45, -45°, 0°, 0°, +45, -45°, 0°, 0°, 0°, 0°, -45°, +45°, 0°, 0°, -45°, +45°; oder
+45°, -45°, -45°, +45°, 0°, 0°, 0°, 90°, 90°, 0°, 0°, 0°, +45°, -45°, -45°, +45°; oder
90°, +45, 0°, -45°, 0°, -45°, 0°, +45°, 90°; oder
0°, +45, -45°, 90°, 90°, -45°, +45°, 0°; oder
0°, +45, 90°, -45°,-45°, 90°, +45°, 0°; oder
+45, -45°, 0°, 0°, 90°, 90°, 90°, 90°, 0°, 0°, -45°, +45°; oder
+45, -45°, 0°, 0°, 90°, 90°, +45, -45°, 0°, 0°, 90°, 90°, 90°, 90°, 0°, 0°, -45°, +45°, +45, 90°, 90°, 0°, 0°, -45°, +45°, +45, oder
0°, 33°, -33°, 0; oder
0°, 33°, 90°, -33°, 0.

Das Verfahren wird bevorzugt kontinuierlich durchgeführt.

Mit dem erfindungsgemäßen Verfahren können Vorschubgeschwindigkeiten der flächig übereinander angeordneten und vollflächig oder zumindest nahezu vollflächig zu verbindenden zwei, drei, vier, fünf, sechs oder mehr Tapes bzw. der aus ihnen hergestellten faserverstärkten Halbzeugplattenbahn von 1 bis 30 m pro Minute, bevorzugt 5 bis 15 m pro Minute erreicht werden.

Außerdem wird bei dem erfindungsgemäßen Verfahren kein Trennmittel gebraucht.

Gegenstand der Erfindung ist somit außerdem:
Verfahren zur Herstellung einer faserverstärkten Halbzeugplatte, bei dem zwei, drei, vier, fünf, sechs oder mehr flächig übereinander angeordnete unidirektional faserverstärkte Halbzeuge (Tapes) mittels Ultraschallschweißen vollflächig oder zumindest nahezu vollflächig untrennbar miteinander verbunden werden.

Gegenstand der Erfindung ist außerdem eine:
Vorrichtung zur Ausführung des oben beschriebenen Verfahrens, wobei mindestens eine Sonotrode parallel zur Laufrichtung der Tapes über oder unter diesen angeordnet ist und mindestens ein Ambossrad als Widerlager zur mindestens einen Sonotrode auf der der mindestens einen Sonotrode abgewandten Seite der Tapes angebracht ist.

Die mindestens eine Sonotrode ist bevorzugt als Rollsonotrode ausgestaltet.

Die Vorrichtung kann eine oder mehrere Sonotroden aufweisen, abhängig von der Breite des Tapes. So kann die Vorrichtung auch zwei, drei, vier, fünf, sechs oder mehr Sonotroden aufweisen. Erfindungsgemäß wird pro 20 bis 100 mm Breite der Tapes eine Sonotrode eingesetzt. Weist die Vorrichtung mehrere Sonotroden auf, so können diese eine gerade Reihe quer zur Laufrichtung der Tapes bilden, zueinander versetzt angeordnet sein, z.B. in Zickzackanordnung, oder schräg fluchtend über die Breite der Tapes bzw. Halbzeugplattenbahn angeordnet sein.

Mit der erfindungsgemäßen Vorrichtung können Vorschubgeschwindigkeiten der flächig übereinander angeordneten und vollflächig oder zumindest nahezu vollflächig zu verbindenden zwei, drei, vier, fünf, sechs oder mehr Tapes bzw. der aus ihnen hergestellten faserverstärkten Halbzeugplattenbahn von 1 bis 30 m pro Minute, bevorzugt 5 bis 15 m pro Minute erreicht werden.

Bevorzugt dient ein Ambossrad jeweils einer Sonotrode als Widerlager. Das Ambossrad kann aber auch als Walze ausgeführt sein, die mehreren oder allen Sonotroden als Widerlager dient.

In Vorschubrichtung hinter der Sonotrode kann noch eine Anpresswalze angebracht sein, die auf die ultraschallverschweißte faserverstärkte Halbzeugplatte mechanischen Druck ausübt und dadurch die Verbindung der Tapes in der faserverstärkten Halbzeugplatte zusätzlich festigt.

Durch mindestens eines der oben beschriebenen erfindungsgemäßen Verfahren ist auch eine faserverstärkte Halbzeugplatte erhältlich.

Die Dicke dieser Platte kann abhängig von der Anzahl und Dicke der Tapes, aus denen sie aufgebaut ist, aus einem weiten Bereich ausgewählt sein. Bevorzugt beträgt die Dicke dieser Platte jedoch von 200 µm bis 1500 µm, besonders bevorzugt von 300 µm bis 1200 µm.

Eine solche Halbzeugplatte kann zur Herstellung von Gehäuseteilen oder Gehäusen oder Deckeln für IT-Geräten, insbesondere von mobilen Computern wie Notebooks und Laptops, von Gehäusen oder Gehäuseteilen von Haushaltsgeräten, Teilen, insbesondere Karosserieteilen, von Automobilen oder Teilen von Flugzeugen verwendet werden.

In anderen Worten: die Halbzeugplatte kann als Vorprodukt von Gehäuseteilen oder Gehäusen oder Deckeln für IT-Geräten, insbesondere von mobilen Computern wie Notebooks und Laptops, von Gehäusen oder Gehäuseteilen von Haushaltsgeräten, Teilen, insbesondere Karosserieteilen, von Automobilen oder Teilen von Flugzeugen verwendet werden.

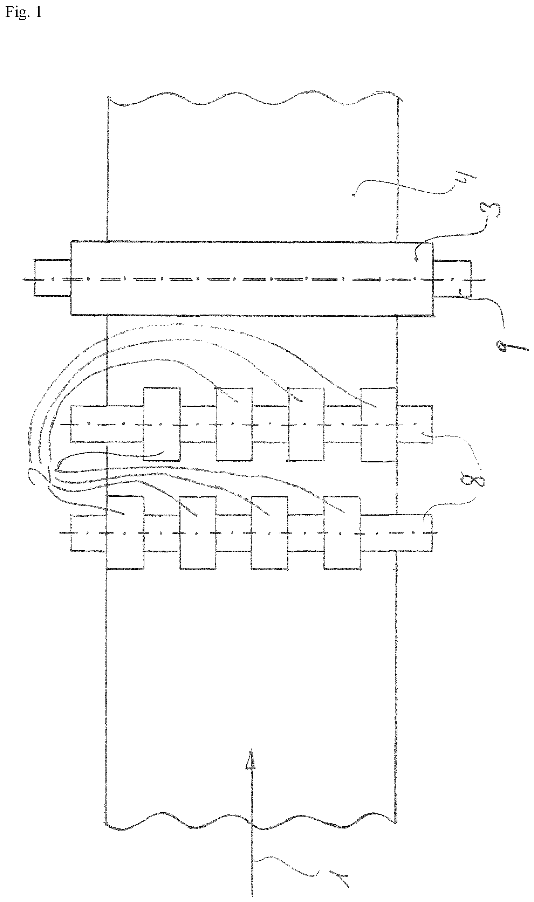

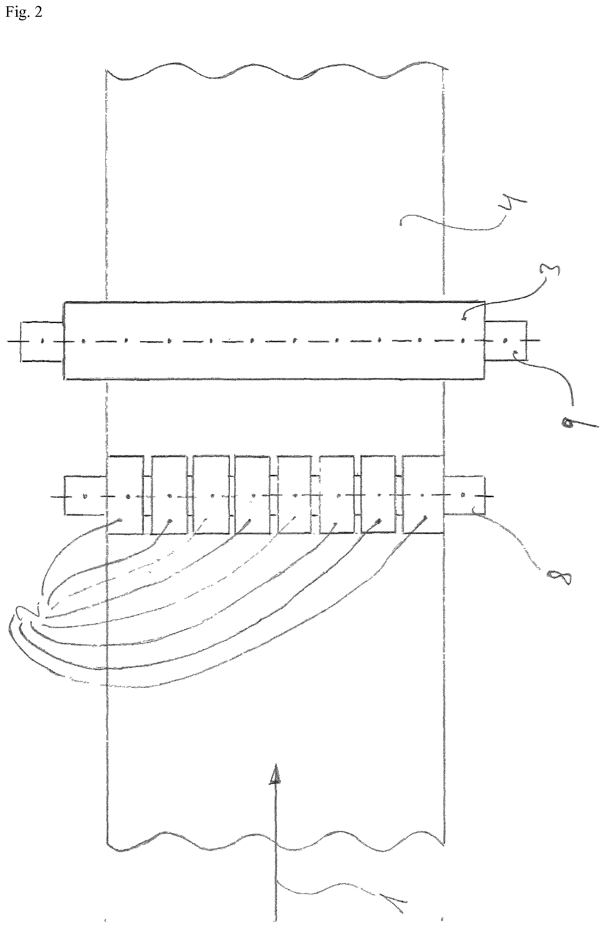

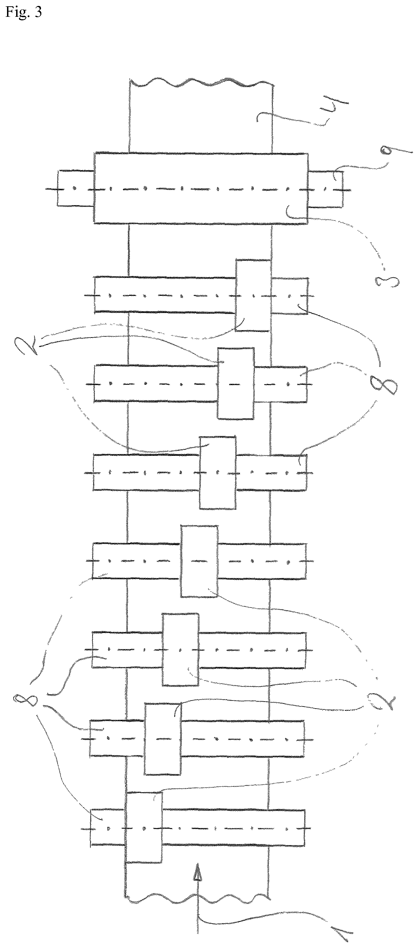

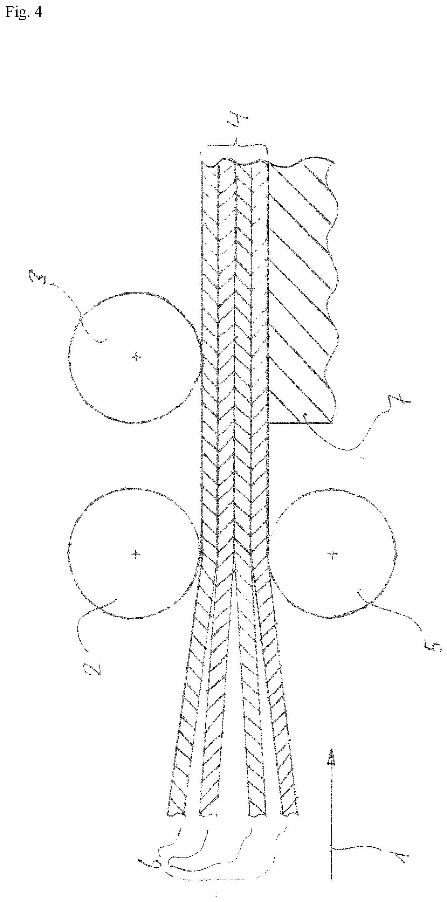

Die erfindungsgemäße Vorrichtung ist in den Figuren 1 bis 4 beispielhaft und in vereinfachter Form ausgeführt, ohne dass die Erfindung auf die in diesen Figuren dargestellten Ausführungsformen beschränkt werden soll.

Dabei zeigt:
- Fig. 1: Die Draufsicht eines Ausschnitts aus der erfindungsgemäßen Vorrichtung zur Herstellung einer faserverstärkten Halbzeugplatte, wobei die Sonotroden im Zick-Zack angeordnet sind.
- Fig. 2: Die Draufsicht eines Ausschnitts aus der erfindungsgemäßen Vorrichtung zur Herstellung einer faserverstärkten Halbzeugplatte, wobei die Sonotroden einer geraden Reihe angeordnet sind.
- Fig. 3: Die Draufsicht eines Ausschnitts aus der erfindungsgemäßen Vorrichtung zur Herstellung einer faserverstärkten Halbzeugplatte, wobei die Sonotroden schräg fluchtend über die Breite der Tapes bzw. Halbzeugplattenbahn angeordnet sind.
- Fig. 4: Die Seitenansicht eines Ausschnitts aus der erfindungsgemäßen Vorrichtung zur Herstellung einer faserverstärkten Halbzeugplatte.

Dabei sind:
- 1: Vorschubrichtung
- 2: Sonotrode(n)
- 3: Anpresswalze
- 4: faserverstärkte Halbzeugplattenbahn
- 5: Ambossrad
- 6: Tape(s)
- 7: Unterlage für faserverstärkte Halbzeugplattenbahn
- 8: Achse(n) der Sonotroden
- 9: Achse der Ambosswalze

## Patentansprüche

1. Kontinuierlich durchgeführtes Verfahren zur Herstellung einer faserverstärkten Halbzeugplatte umfassend folgende Arbeitsschritte:
(1) Abrollen von zwei, drei, vier, fünf, sechs oder mehr unidirektional faserverstärkten Halbzeugen von Rollen;
(2) Verbinden der zwei, drei, vier, fünf, sechs oder mehr unidirektional faserverstärkten Halbzeuge zu einer faserverstärkten Halbzeugplattenbahn mittels Ultraschallschweißen;
(3) Abschneiden der faserverstärkten Halbzeugplatte von der faserverstärkten Halbzeugplattenbahn,
wobei
zwei, drei, vier, fünf, sechs oder mehr flächig übereinander angeordnete unidirektional faserverstärkte Halbzeuge mittels Ultraschallschweißen untrennbar miteinander verbunden werden,
wobei die faserverstärkten Halbzeuge eine Breite von 500 bis 1000 mm aufweisen,
wobei pro 20 bis 100 mm Breite der faserverstärkten Halbzeuge eine Sonotrode eingesetzt wird,
und wobei kein Trennmittel gebraucht wird.

2. Verfahren nach Anspruch 1, **dadurch gekennzeichnet, dass** die zwei, drei, vier, fünf, sechs oder mehr unidirektional faserverstärkten Halbzeuge bezogen auf die Flächen, mit denen sie sich gegenüberliegen, zu mehr als 99 %, bevorzugt zu 99,5 % bis 99,99 %, besonders bevorzugt zu 99,8 % bis 99,9 %, miteinander verbunden werden.

3. Verfahren nach einem der Ansprüche 1 oder 2, **dadurch gekennzeichnet, dass** sich die Ausrichtung der Fasern mindestens eines der zwei, drei, vier, fünf, sechs oder mehr unidirektional faserverstärkten Halbzeuge von der Ausrichtung der Fasern des oder der anderen unidirektional faserverstärkten Halbzeuge unterscheidet.

4. Verfahren nach einem der Ansprüche 1 bis 3, **dadurch gekennzeichnet, dass** die Ausrichtung der Fasern der zwei, drei, vier, fünf, sechs oder mehr unidirektional faserverstärkten Halbzeuge gleich ist.

5. Vorrichtung zur Ausführung des Verfahrens nach einem der Ansprüche 1 bis 4, **dadurch gekennzeichnet, dass** mindestens eine Sonotrode parallel zur Vorschubrichtung der unidirektional faserverstärkten Halbzeuge über oder unter diesen angeordnet ist und mindestens ein Ambossrad als Widerlager zur mindestens einen Sonotrode auf der der mindestens einen Sonotrode abgewandten Seite der unidirektional faserverstärkten Halbzeuge angebracht ist.

7. Vorrichtung nach Anspruch 5, **dadurch gekennzeichnet, dass** in Vorschubrichtung hinter der Sonotrode eine Anpresswalze angebracht ist.

## Claims

1. Continuously performed process for producing a fibre-reinforced semifinished panel comprising the following operations:
(1) unrolling two, three, four, five, six or more unidirectionally fibre-reinforced semifinished products from rolls;
(2) joining the two, three, four, five, six or more unidirectionally fibre-reinforced semifinished products to afford a fibre-reinforced semifinished panel sheeting by ultrasonic welding;
(3) cutting the fibre-reinforced semifinished panel from the fibre-reinforced semifinished panel sheeting,
wherein
two, three, four, five, six or more face to face superposed unidirectionally fibre-reinforced semifinished products are inseparably conjoined by ultrasonic welding,
wherein the fibre-reinforced semifinished products have a width of 500 to 1000 mm,
wherein one sonotrode is employed per 20 to 100 mm in width of the fibre-reinforced semifinished products,
and wherein no release means is required.

2. Process according to Claim 1, **characterized in that** the two, three, four, five, six or more unidirectionally fibre-reinforced semifinished products are conjoined to an extent of more than 99%, preferably to an extent of 99.5% to 99.99%, particularly preferably to an extent of 99.8% to 99.9%, based on the surfaces with which they face each other.

3. Process according to one of Claims 1 or 2, **characterized in that** the alignment of the fibres of at least one of the two, three, four, five, six or more unidirectionally fibre-reinforced semifinished products is distinct from the alignment of the fibres of the other unidirectionally fibre-reinforced semifinished product or products.

4. Process according to any of Claims 1 to 3, **characterized in that** the alignment of the fibres of the two, three, four, five, six or more unidirectionally fibre-reinforced semifinished products is identical.

5. Apparatus for implementing the process according to any of Claims 1 to 4, **characterized in that** parallel to the advancement direction of the unidirectionally fibre-reinforced semifinished products at least one sonotrode is arranged above or below said products and as an abutment to the at least one sonotrode at least one anvil wheel is mounted on the side of the unidirectionally fibre-reinforced semifinished products facing away from the at least one sonotrode.

7. Apparatus according to Claim 5, **characterized in that** a pressing roller is mounted downstream of the sonotrode in the advancement direction.

## Revendications

1. Procédé réalisé en continu pour la fabrication d'une plaque de produit semi-fini renforcée par des fibres, comprenant les étapes de travail suivantes :
(1) le déroulement de deux, trois, quatre, cinq, six ou davantage de produits semi-finis renforcés unidirectionnellement par des fibres à partir de rouleaux ;
(2) la liaison des deux, trois, quatre, cinq, six ou davantage de produits semi-finis renforcés unidirectionnellement par des fibres en une bande de plaque de produit semi-fini renforcée par des fibres au moyen d'un soudage par ultrasons ;
(3) la découpe de la plaque de produit semi-fini renforcée par des fibres à partir de la bande de plaque de produit semi-fini renforcée par des fibres,
dans lequel
deux, trois, quatre, cinq, six ou davantage de produits semi-finis renforcés unidirectionnellement par des fibres agencés à plat les uns sur les autres sont reliés les uns avec les autres de manière inséparable au moyen d'un soudage par ultrasons,
dans lequel les produits semi-finis renforcés par des fibres présentent une largeur de 500 à 1 000 mm,
dans lequel une sonotrode est utilisée pour 20 à 100 mm de largeur des produits semi-finis renforcés par des fibres,
et dans lequel aucun agent de séparation n'est utilisé.

2. Procédé selon la revendication 1, **caractérisé en ce que** les deux, trois, quatre, cinq, six ou davantage de produits semi-finis renforcés unidirectionnellement par des fibres sont reliés les uns avec les autres, par rapport aux surfaces avec lesquelles ils s'opposent, à hauteur de plus de 99 %, de préférence à hauteur de 99,5 % à 99,99 %, de manière particulièrement préférée à hauteur de 99,8 % à 99,9 %.

3. Procédé selon l'une quelconque des revendications 1 ou 2, **caractérisé en ce que** l'orientation des fibres d'au moins un des deux, trois, quatre, cinq, six ou davantage de produits semi-finis renforcés unidirectionnellement par des fibres diffère de la l'orientation des fibres du ou des autres produits semi-finis renforcés unidirectionnellement par des fibres.

4. Procédé selon l'une quelconque des revendications 1 à 3, **caractérisé en ce que** l'orientation des fibres des deux, trois, quatre, cinq, six ou davantage de produits semi-finis renforcés unidirectionnellement par des fibres est identique.

5. Dispositif pour la réalisation du procédé selon l'une quelconque des revendications 1 à 4, **caractérisé en ce qu'**au moins une sonotrode est agencée en parallèle à la direction d'alimentation des produits semi-finis renforcés unidirectionnellement par des fibres au-dessus ou en dessous de ceux-ci, et au moins une roue-enclume est disposée en tant que butée pour ladite au moins une sonotrode sur le côté opposé à ladite au moins une sonotrode des produits semi-finis renforcés unidirectionnellement par des fibres.

7. Dispositif selon la revendication 5, **caractérisé en ce qu'**un cylindre de pression est disposé derrière la sonotrode dans la direction d'alimentation.
